# EUROPEAN PATENT SPECIFICATION

(11) **EP 2 107 801 B1**
(45) Date of publication and mention of the grant of the patent: **29.09.2010**
(21) Application number: 09154924.6
(22) Date of filing: 11.03.2009
(51) Int. Cl.: H04N 5/44, H04N 5/76

(54) **Method for transmission of additional data on a channel inserted in a network of audiovisual channels and a device to transmit such additional data**
Verfahren zur Übertragung von zusätzlichen Daten auf einem Kanal in einem Netzwerk von audiovisuellen Kanälen und Vorrichtung zur Übertragung dieser zusätzlichen Daten
Procédé de transmission de données supplémentaires sur un canal inséré dans un réseau de canaux audiovisuels et dispositif de transmission de ces données supplémentaires

(30) Priority: 31.03.2008 FR 0852096
(43) Date of publication of application: 07.10.2009
(73) Proprietor: Thomson Licensing, 92130 Issy-les-Moulineaux (FR)
(72) Inventor: Chevallier, Louis, 92648, BOULOGNE CEDEX (FR); Querre, Goulven, 92648, BOULOGNE CEDEX (FR); Serre, Catherine, 92648, BOULOGNE CEDEX (FR)
(74) Representative: Benezeth, Philippe J.L. M.

(56) References cited:
- EP-A- 1 538 833
- NL-C- 1 012 437

## Description

The present invention relates to a method for transmission of additional data on a channel inserted in a network of audiovisual channels, and a device to transmit such additional data.

Digital TV decoders enable the reception and display of a set of broadcast video programmes constituting a package. According to the case, broadcasting of channels is ensured by a satellite, a terrestrial radio transmitter (or Digital Terrestrial Television, DTT in abbreviated form), a device connected to a cable or an IP data network. Each channel occupies a determined frequency band. In the case of broadcasting on digital channels, those channels transmitting packets of multiplexed data, the packets are identified to form a Transport Stream (TS). The transport streams broadcast video and audio data enabling reproduction, after decoding of the audiovisual programmes. The streams also transport information on the programmes broadcasted. This information is used by an Electronic Programme Guide (EPG) to present upon use, the proposed audiovisual content of the network. Typically, the EPG displays the programme titles, the parameters enabling their reception and for each programme, the list of transmissions scheduled for the day or week, with for each the title and start time and the subject. This information can be used to command the recording of a programme selected by the user when the receiver is equipped with a means of recording, such as a hard disk for example.

In general decoders receive the EPG through the same channel as the programmes themselves in the form of tables respecting a standardized format (for example the DVB standard). The standards specify the format of packets transporting the data and the method for the receiver to extract them from the transport stream. Generally, the channels package broadcasts the EPG and the service data describing the programmes on a specific stream. The programme broadcaster thus ensures the creation and updating of the EPG. The bandwidth of a transport stream is limited, so that it can occur that the EPG is insufficiently complete due to lack of bandwidth or lack of available data or by choice. For example, the subjects of audiovisual programmes are not available or information on programmes scheduled for the day is absent. If the start or end of a programme is missing, then, during the programming of the recording of a transmission on a PVR (or the automatic start-up of a decoder for this transmission), the user must enter the times and durations of the desired programmes taking this information from a journal. Quite often, only the programme title is broadcast, which is insufficient for the user to make a selection.

The Dutch patent NL 1012437 filed by the SONY company and published on 8^{th} January 2001 describes a device capable of scanning the frequencies on a given frequency range and finding an available channel in order to broadcast a channel locally. This new channel broadcasts the audiovisual documents and is able to add existing channels. This document describes how the device receives the documents from a wired network and transmits them as a radio-broadcast channel. This document depicts how to add a new channel to the current network, but provides no information enabling the provision of additional information on the programmes broadcast by the existing channels.

The problem is therefore posed of how to increase the information intended to be displayed by an EPG. One solution consists in that the broadcast network receiver has another means of communication enabling interrogation of another network, this being bidirectional. Typically, a television decoder has a link with the telephone network and a modem for the transmission of data. The decoder then emits a request on a network, for example Internet, and connects to a site broadcasting the complete EPG data. The broadcast network can also transmit a server reference enabling the decoder to connect and transmit requests to download complimentary data. The decoder can also launch requests using keywords, for example the titles of the programmes broadcast, and receive complimentary information on these programmes. The EPG then displays the data received from the broadcast network and adds that received from the other network.

This method necessitates having several means of communication for each decoder. In the domain of a DTT network, the receivers are generally low cost and the addition of a bidirectional means of communication increases the price and complexity.

The present invention offers a new way to transmit service information enabling an enhancement of Electronic Programme Guides.

One of the purposes of the present invention is means of transmission of service information on a channel inserted into a broadcast network of audiovisual channels and received by a receiver, characterized in that it comprises a determination step by a local computer with characteristics of a frequency channel available in the frequency interval of the broadcast network, said network broadcasting the primary service data, a search step from at least one other network of the secondary data not transmitted by the broadcast network, a local transmission step of secondary data on the available frequency channel, said secondary data transmitted in the same format as the primary data transmitted by the broadcast network.

In this way, a local computer can search for additional information from a network other that the broadcast network and transmit it on a restricted broadcast channel, to the decoders that are found in an environment in proximity to the computer.

According to a first improvement, the local computer comprises a means of reception of channels transmitted by the broadcast network and the primary and secondary data are transmitted on the available frequency channel. In this way, the receiver device can receive on a single channel all of the EPG data. According to another improvement, the primary data transmitted by the broadcast network are used to search for the secondary data received from another network. In this way, the local computer can use the EPG data already broadcast to search for other data that can be used for the EPG of the receiver device.

According to an improvement, the user himself introduces to the local computer an indication on the type of secondary data to search for on the other network in order to transmit them on the available frequency channel. In this way, the increase in EPG data is implemented according to the directives provided by the user. According to another improvement, only the secondary data are transmitted on the available frequency channel. In this way, the bandwidth of the local additional channel is only used for the broadcasting of new EPG data.

According to another improvement, the local computer comprises a means of detection of broadcast network channel carrier frequencies. The computer selects a carrier frequency not used by the broadcast network to transmit the available frequency channel. In this way, the transmission of additional data is automatically implemented. According to a variant, it is the user who introduces to the local computer the references of the available frequency channel to locally broadcast the additional data. Hence, the computer does not need to have means for reception of broadcast network channels.

Another purpose of the present invention is an electronic device transmitting service information on a channel inserted into a broadcast network of audiovisual channels, characterized in that it comprises a determination means the characteristics of a frequency channel available in the frequency interval of the broadcast network, said network broadcasting the primary service data, a reception means receiving the secondary data not transmitted by the broadcast network from at least one other network, a local means of transmission of secondary data on the available frequency channel, said secondary data being transmitted in the same format as the primary data transmitted by the broadcast network.

Other characteristics and advantages of the present invention will emerge from the description of the following embodiments to be taken as non-restrictive examples, made with reference to the figures attached wherein:
- Figure 1 represents the set of actors implementing the method according to an embodiment of the invention,
- Figure 2 is an example of a flow chart of the main steps carried out for the implementation of the method of the invention,
- Figure 3 shows the channels transmitted by the network and by the local computer and detected by the receiver.

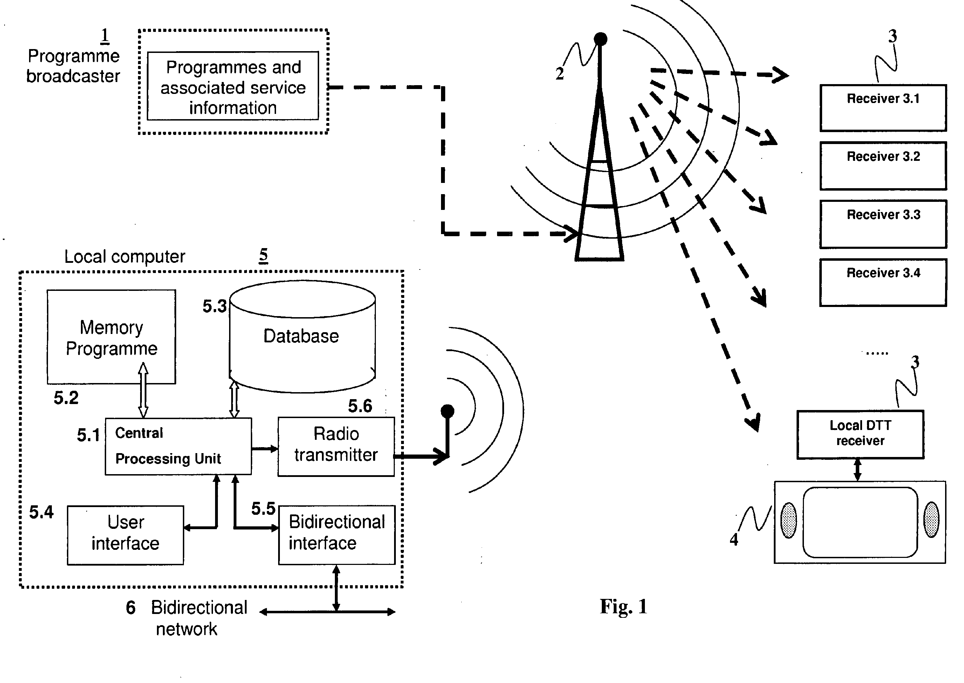

Figure 1 presents the different actors implementing the method according to an embodiment of the invention. A programme broadcaster 1 receives the audiovisual contents and is charged with broadcasting them. It transmits the different streams to a broadcast network 2 represented by an antenna 2 broadcasting a plurality of digital channels over a large geographic range. Typically, the network used is digital terrestrial radio. The different streams are digitally coded, several streams can be transported on the same frequency channel. The users possess a receiver 3 able to receive the frequency channels using an antenna. The packets of data are filtered according to their headers, the packets of the same stream are decoded in order to provide the image signals that are transmitted to a screen 4 and the audio signals intended for the speakers.

The receiver 3 comprises a data display circuit on the screen, often called an OSD ("On Screen Display") circuit. The OSD circuit is a graphics generator that enables the display on the screen of menus and the insertion and superimposition of an image. The OSD circuit is controlled by the Central Processing Unit of the receiver. Some packets of data received by the receiver 3 contain service data. These data are processed and formatted using an EPG (Electronic Programme Guide). Using the remote control associated with the receiver, the user navigates in the various menus of the EPG and can select the channels according to their broadcast contents. If the receiver has a hard disk, the user can also command the recording of a programme that will be broadcast at a later time.

At home, the user also has a computer 5. The computer 5 comprises a Central Processing Unit 5.1 linked to a memory with a run program 5.2, a hard disk 5.3 containing a document database and a user interface 5.4. The computer 5 also contains an interface 5.5 for communication with at least one network that is other than the broadcast network 2. This or other networks can be unidirectional or bidirectional. For example, the computer is connected via a telephone line to the Internet network, and it has a removable interface enabling the reception of signals from a satellite. The computer also contains a transmitter of short range radio channels 5.6. This transmitter can be integrated in the computer or can be presented as an additional electronic card, for example a module linked by a USB port. The local transmitter 5.6 is designed to transmit at least one radio channel in the range of radio frequencies compatible with the channels broadcast by the antenna 2. The range of the local transmitter is limited to a dozen meters so as not to cause interference in other residences.

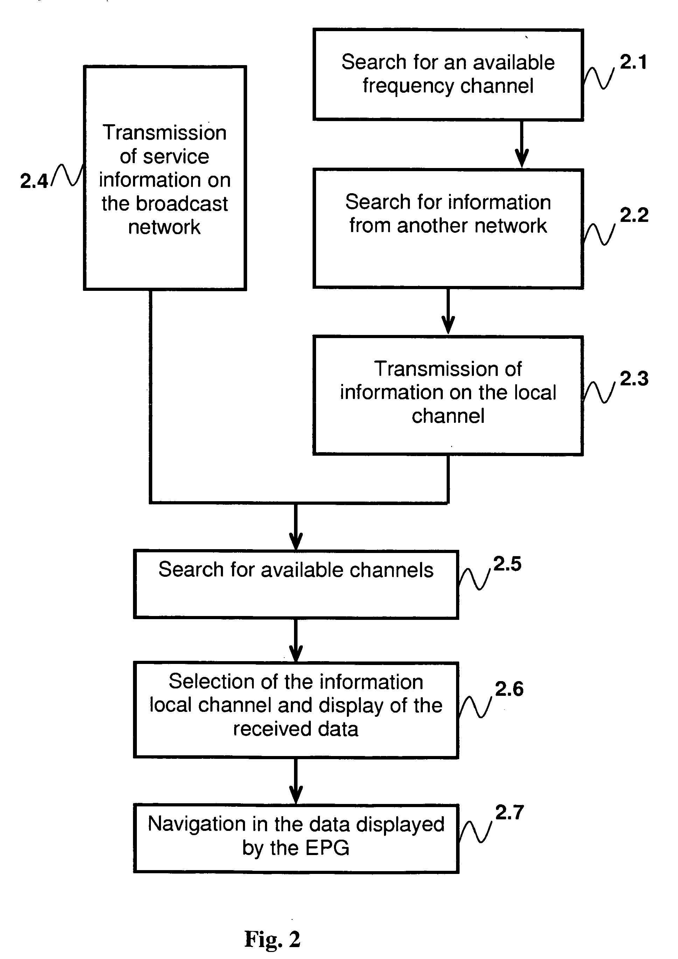

After having described the different elements of the invention, an explanation of how they cooperate will now be made. Figure 2 shows a general flow chart of the steps executed within the various elements previously described.

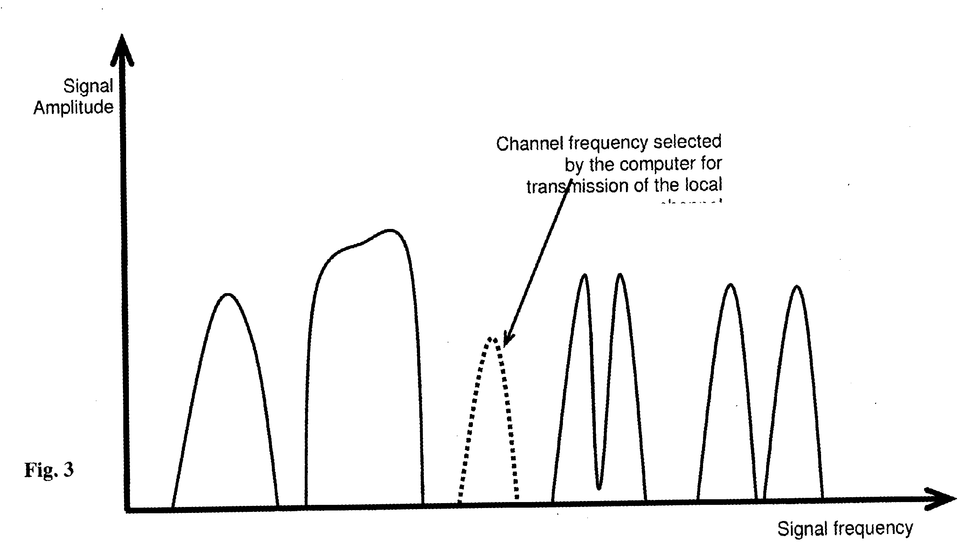

At step 2.1, the local computer 5 is started-up and determines a frequency available within the range of frequencies of the channel broadcast network. A simple way consists in the user himself introducing the number of the digital channel using the user interface 5.4, typically by typing the channel reference on the computer keyboard. To do this, he first turns-on his receiver 3 and notes all the channels present. Then, he selects the channel number that was not found by the receiver 3 and introduces it using a configuration menu in the computer 5 that memorizes it. According to an improvement, the computer 5 comprises a radio receiver receiving the broadcast network channels. The computer can then analyze the different carrier frequencies occupied by the broadcast network 2 and automatically determine a free carrier frequency. Figure 3 shows the amplitude if the received signal according to the frequency. It can be seen that the broadcast network is already transmitting on a number of carrier frequencies. Between two frequencies used by the broadcast network, it is possible to insert a new carrier frequency. This carrier frequency, indicated by a dotted line in Figure 3, is then used by the transmitter 5.6 to transmit the local information channel. According to an improvement, the user no longer needs to introduce the channel number.

At step 2.2, the computer 5 receives from at least one other network than the broadcast network 2 via its interface 5.5, data on the broadcast programmes. This data is complimentary to that contained in the broadcast service information. This information can be for example:
- attributes of programmes scheduled for broadcast: type, parental level, programme theme (film, news, sport, etc.), programme duration, director's name and main actors,
- a short summary, a long summary, awards that the programme has obtained since release,
- photos associated with the programme, an audiovisual sequence, an interview with the director, etc.

These data are generally too heavy to be broadcast by the network 2. a computer that does not have the same restrictions can easily download and memorize them locally. Advantageously, the user himself configures the computer to define the type of information to search for on the other network(s).

Then in step 2.3, the computer 5 formats the data according to the same standard as that of the broadcast data and broadcasts them locally with his radio transmitter 5.6. Hence, the computer 5 transmits a veritable local information channel that can be received by all the receivers 3 situated in close proximity to the computer 5. According to a preferred embodiment, the radio transmitter 5.6 of the computer transmits the EPG data of the broadcast network and the data that it has extracted from one or more networks.

Concomitantly with the broadcast of the information local channel by the computer 5, the broadcaster 1 transmits via the broadcast network 2 audiovisual channels containing the programmes (step 2.4). The information transmitted contains audio and video data and the programme guide. The data of the programme guide informs on the name of the channel and title of the programmes broadcast associated with a temporal indication of the duration of the broadcast. This data can be accessible by the computer 5 if it comprises a radio receiver receiving the channels of the broadcast network.

At step 2.5, the user configures his receiver 3 so that it scans the different frequencies in order to detect all the available channels. The user has taken care to power-up his computer 5 and to activate the transmitter 5.6 so that it transmits the data. The receiver 3 then detects the channels of the broadcast network and the information local channel. Once the installation has been completed, the user launches the EPG to select a programme.

The information local channel transmitted by the computer 5 appears in the EPG, and at step 2.6, the user selects it. The receiver 3 recovers from the local channel the service information that will be displayed in the EPG grid. In this way, the data transmitted by the information local channel are added to that received from the broadcast network 2. Advantageously, the receiver memorizes the data received in an internal database of the receiver 3. In step 2.7, the user navigates in the programmes grid and can select channels. Not all of the data of the information local channel are directly displayable in the programmes grid. In selecting a programme, the keys of the remote control enable the display of some data, for example the summary, the director interview, the trailer, etc. Hence the EPG displayed by the receiver 3 offers the user the possibility of showing numerous complementary items of information associated with the programmes, and this without the receiver 3 knowing that the channel is local and not transmitted by the broadcast network. As a result, the receiver 3 does not need a modification to receive an additional channel. With the increase in data displayed, the user is better informed of the broadcast audiovisual content and is better informed in his selection.

According to an improvement, the computer 5 comprises a radio receiver receiving radio signals of the same range of frequencies as the broadcast network 2. Typically, this radio receiver is integrated into the radio transmitter module 5.6. On recovering the data of the programmes guide transmitted by the broadcast network 2, the local computer is informed of the various programmes broadcast. The computer 5 can thus launch searches on another network 6, on the database of the broadcast network 2, in order to download additional information. Typically, the computer launches a search engine proposing keywords contained in the data of the programme guide. It is thus possible using the title of a film, to obtain the list of actors, the short and long summaries, the name of the director, and to download the trailer, the director interview, etc. The data recovered on another network are then transmitted by radio on the information local channel. They are received by the receiver 3 and are available on the EPG.

If the receiver 3 has a double tuner, one can be adjusted to the frequency channel selected by the user and the other on the local information channel. The EPG then recovers the service information from the two channels and puts them together in the database from where they are extracted to be displayed. In this case, the computer does not need to transmit on the information local channel, the additional information that is already broadcast on the broadcast network. This characteristic enables consecrating the entire bandwidth of the local channel to new data not broadcast by the network 2. This option can be selected on the computer via a configuration menu.

The transmission power of the transmitter circuit 5.6 must be controlled so that the reception of the chain of information is carried out locally, and is received by the devices of the computer user. Advantageously, the transmitter 5.6 of the computer 5 injects the radio signal into the wire of the antenna of the receiver 3, for example by connecting directly onto the coaxial cable that connects the receiver to its external antenna. In this way, the radiation of the transmitter circuit 5.6 is perfectly controlled. This improvement is particularly useful when the receivers 3 are situated inside buildings.

The invention is not limited to the embodiments previously described. Specifically, it could also be used to enrich any EPG data, whether the broadcast programmes are visual, audio or audiovisual.

## Claims

1. Method for transmission of service information on a channel inserted into a broadcast network (2) of audiovisual channels and received by a receiver (3), **characterized in that** it comprises a determination step (2.1) by a local computer (5) with characteristics of a frequency channel available in the frequency interval of the broadcast network, said network broadcasting the primary service data, a search step (2.2) from at least one other network of the secondary data not transmitted by the broadcast network (2), a local transmission step (2.3) of secondary data on the available frequency channel, said secondary data transmitted in the same format as the primary data transmitted by the broadcast network.

2. Method for the transmission of service information according to claim 1, the local computer (5) comprising a means of reception of channels transmitted by the broadcast network, **characterized in that** the primary and secondary data are transmitted on the available frequency channel.

3. Method for the transmission of service information according to claim 1 or 2, the local computer (5) comprising a means of reception of channels transmitted by the broadcast network, **characterized in that** the primary data transmitted by the broadcast network are used to search for secondary data received from another network.

4. Method for transmission of service information according to claim 1, **characterized in that** it comprises a step of introduction to a local computer (5) of an indication on the type of secondary data to search for on another network in order to transmit it on the available frequency channel.

5. Method for the transmission of service information according to claim 1, the local computer (5) comprising a means of reception of channels transmitted by the broadcast network, **characterized in that** only the secondary data are transmitted on the available frequency channel.

6. Method for transmission of service information according to any one of the preceding claims, **characterized in that** the local computer (5) comprises a means of detection of carrier frequencies of channels of the broadcast network, the computer (5) selecting a carrier frequency unused by the broadcast network to transmit the available frequency channel.

7. Method for transmission of service information according to any one of claims 1 to 5, **characterized in that** it comprises a step of introduction on the local computer (5) of references of the available frequency channel to broadcast locally the additional information.

8. An electronic device (5) transmitting service information on a channel inserted into a broadcast network (2) of audiovisual channels, **characterized in that** it comprises a determination means (5.1, 5.2) the characteristics of a frequency channel available in the frequency interval of the broadcast network, said network broadcasting the primary service data, a reception means (5.5) receiving the secondary data not transmitted by the broadcast network (2) from at least one other network (6), a local means of transmission (5.6) of secondary data on the available frequency channel, said secondary data being transmitted in the same format as the primary data transmitted by the broadcast network.

9. Electronic device (5) according to claim 8 comprising a means of reception of channels transmitted by the broadcast network, **characterized in that** the primary data are also transmitted by local transmission means (5.6) on the available frequency channel.

10. Electronic device (5) according to claim 8 or 9 comprising a means of reception (5.5) of channels transmitted by the broadcast network, **characterized in that** the primary data transmitted by the broadcast network are used for the search for the secondary data received from another network.

11. Electronic device (5) according to claim 8, **characterized in that** it comprises a means of introduction (5.4) of an indication on the type of secondary data to search for on another network in order to transmit it on the available frequency channel.

12. Electronic device (5) according to claim 8 comprising a means of reception of channels transmitted by the broadcast network, **characterized in that** the only the secondary data are transmitted on the available frequency channel.

13. Electronic device (5) according to any one of claims 8 to 12, **characterized in that** it comprises a means of detection (5.1, 5.2) of carrier frequencies of channels of the broadcast network, the electronic device (5) selecting a carrier frequency not used by the broadcast network to transmit the available frequency channel.

14. Electronic device (5) according to any one of claims 8 to 12, **characterized in that** it comprises a means of introduction (5.4) of characteristics of an available frequency channel to broadcast locally the additional information.

15. Method for transmission of service information according to any one of claims 1 to 7, **characterized in that** the same format of the first and the second service data does not allow distinguishing if the first and the second service data are transmitted by the broadcast network or by the local computer.

## Patentansprüche

1. Verfahren zur Übertragung von Diensteinformationen auf einem Kanal, der in ein Rundfunknetzwerk (2) von audiovisuellen Kanälen eingefügt wird und von einem Empfänger (3) empfangen wird, **dadurch gekennzeichnet, dass** es umfasst: einen Bestimmungsschritt (2.1) durch einen lokalen Computer (5) mit Eigenschaften eines Frequenzkanals, die in dem Frequenzintervall des Rundfunknetzwerks verfügbar sind, wobei das Netzwerk die primären Dienstedaten sendet, einen Suchschritt (2.2) von mindestens einem anderen Netzwerk der nicht von dem Rundfunknetzwerk (2) übertragenen sekundären Daten, einem lokalen Übertragungsschritt (2.3) von sekundären Daten auf dem verfügbaren Frequenzkanal, wobei die sekundären Daten in demselben Format übertragen werden wie die primären Daten von dem Rundfunknetzwerk übertragen werden.

2. Verfahren zur Übertragung von Diensteinformationen nach Anspruch 1, bei dem der lokale Computer (5) ein Mittel zum Empfang von von dem Rundfunknetzwerk übertragenen Kanälen umfasst, **dadurch gekennzeichnet, dass** die primären und die sekundären Daten auf dem verfügbaren Frequenzkanal übertragen werden.

3. Verfahren zur Übertragung von Diensteinformationen nach Anspruch 1 oder 2, bei dem der lokale Computer (5) ein Mittel zum Empfang von von dem Rundfunknetzwerk übertragenen Kanälen umfasst, **dadurch gekennzeichnet, dass** die von dem Rundfunknetzwerk übertragenen primären Daten zur Suche nach von einem anderen Netzwerk empfangenen sekundären Daten verwendet werden.

4. Verfahren zur Übertragung von Diensteinformationen nach Anspruch 1, **dadurch gekennzeichnet, dass** es einen Schritt der Eingabe einer Angabe über den Typ sekundärer Daten zur Suche nach einem anderen Netzwerk in einen lokalen Computer (5), um sie auf dem verfügbaren Frequenzkanal zu übertragen, umfasst.

5. Verfahren zur Übertragung von Diensteinformationen nach Anspruch 1, bei dem der lokale Computer (5) ein Mittel zum Empfang von von dem Rundfunknetzwerk übertragenen Kanälen umfasst, **dadurch gekennzeichnet, dass** auf dem verfügbaren Frequenzkanal nur die sekundären Daten übertragen werden.

6. Verfahren zur Übertragung von Diensteinformationen nach einem der vorhergehenden Ansprüche, **dadurch gekennzeichnet, dass** der lokale Computer (5) ein Mittel zur Erkennung von Trägerfrequenzen von Kanälen des Rundfunknetzwerks umfasst, wobei der Computer (5) zum Übertragen des verfügbaren Frequenzkanals eine von dem Rundfunknetzwerk nicht genutzte Trägerfrequenz auswählt.

7. Verfahren zur Übertragung von Diensteinformationen nach einem der Ansprüche 1 bis 5, **dadurch gekennzeichnet, dass** es einen Schritt der Eingabe von Bezugnahmen des verfügbaren Frequenzkanals zum lokalen Senden der zusätzlichen Informationen auf dem lokalen Computer (5) umfasst.

8. Elektronische Vorrichtung (5), die Diensteinformationen auf einem in ein Rundfunknetzwerk (2) von audiovisuellen Kanälen eingefügten Kanal überträgt, **dadurch gekennzeichnet, dass** sie umfasst: ein Bestimmungsmittel (5.1, 5.2) der Eigenschaften eines in dem Frequenzintervall des Rundfunknetzwerks verfügbaren Frequenzkanals, wobei das Rundfunknetzwerk die primären Dienstedaten sendet, ein Empfangsmittel (5.5), das die von dem Rundfunknetzwerk (2) nicht übertragenen sekundären Daten von mindestens einem anderen Netzwerk (6) empfängt, ein lokales Mittel zur Übertragung (5.6) der sekundären Daten auf dem verfügbaren Frequenzkanal, wobei die sekundären Daten in demselben Format übertragen werden wie die primären Daten von dem Rundfunknetzwerk übertragen werden.

9. Elektronische Vorrichtung (5) nach Anspruch 8, die ein Mittel zum Empfang von von dem Rundfunknetzwerk übertragenen Kanälen umfasst, **dadurch gekennzeichnet, dass** die primären Daten ebenfalls durch lokale Übertragungsmittel (5.6) auf dem verfügbaren Frequenzkanal übertragen werden.

10. Elektronische Vorrichtung (5) nach Anspruch 8 oder 9, die ein Mittel zum Empfang (5.5) von von dem Rundfunknetzwerk übertragenen Kanälen umfasst, **dadurch gekennzeichnet, dass** die von dem Rundfunknetzwerk übertragenen primären Daten für die Suche nach den von einem anderen Netzwerk empfangenen sekundären Daten verwendet werden.

11. Elektronische Vorrichtung (5) nach Anspruch 8, **dadurch gekennzeichnet, dass** sie ein Mittel zur Eingabe (5.4) einer Angabe über den Typ der sekundären Daten, nach denen in einem anderen Netzwerk gesucht werden soll, um sie auf dem verfügbaren Frequenzkanal zu übertragen, umfasst.

12. Elektronische Vorrichtung (5) nach Anspruch 8, die ein Mittel zum Empfang von von dem Rundfunknetzwerk übertragenen Kanälen umfasst, **dadurch gekennzeichnet, dass** auf dem verfügbaren Frequenzkanal nur die sekundären Daten übertragen werden.

13. Elektronische Vorrichtung (5) nach einem der Ansprüche 8 bis 12, **dadurch gekennzeichnet, dass** sie ein Mittel zur Erfassung (5.1, 5.2) von Trägerfrequenzen von Kanälen des Rundfunknetzwerks umfasst, wobei die elektronische Vorrichtung (5) zum Übertragen des verfügbaren Frequenzkanals eine von dem Rundfunknetzwerk nicht verwendete Trägerfrequenz auswählt.

14. Elektronische Vorrichtung (5) nach einem der Ansprüche 8 bis 12, **dadurch gekennzeichnet, dass** sie ein Mittel zur Eingabe (5.4) von Eigenschaften eines verfügbaren Frequenzkanals zum lokalen Senden der zusätzlichen Informationen umfasst.

15. Verfahren zur Übertragung von Diensteinformationen nach einem der Ansprüche 1 bis 7, **dadurch gekennzeichnet, dass** dasselbe Format der ersten und der zweiten Dienstedaten keine Unterscheidung zulässt, ob die ersten und die zweiten Dienstedaten von dem Rundfunknetzwerk oder von dem lokalen Computer übertragen werden.

## Revendications

1. Procédé d'émission de données de service sur un canal inséré dans un réseau (2) de diffusion de canaux audiovisuels et reçus par un récepteur (3) ; **caractérisé en ce qu'**il comporte une étape de détermination (2.1) par un ordinateur local (5) des caractéristiques d'un canal fréquentiel disponible dans l'intervalle de fréquence du réseau de diffusion, le dit réseau diffusant des premières données de service, une étape de recherche (2.2) à partir d'au moins un autre réseau de secondes données non transmises par le réseau de diffusion (2), une étape d'émission (2.3) locale des secondes données sur le canal fréquentiel disponible, lesdites secondes données étant émises au même format que les premières données émises par le réseau de diffusion.

2. Procédé d'émission de données de service selon la revendication 1, l'ordinateur local (5) comportant un moyen de réception des canaux transmis par le réseau de diffusion ; **caractérisé en ce que** les premières et secondes données sont émises sur le canal fréquentiel disponible.

3. Procédé d'émission de données de service selon la revendication 1 ou 2, l'ordinateur local (5) comportant un moyen de réception des canaux transmis par le réseau de diffusion ; **caractérisé en ce que** les premières données émises par le réseau de diffusion sont utilisées pour la recherche des secondes données reçues d'un autre réseau.

4. Procédé d'émission de données de service selon la revendication 1 ; **caractérisé en ce qu'**il comporte une étape d'introduction sur l'ordinateur local (5) d'une indication sur le type des secondes données à rechercher sur l'autre réseau afin de les émettre sur le canal fréquentiel disponible.

5. Procédé d'émission de données de service selon la revendication 1, l'ordinateur local (5) comportant un moyen de réception des canaux transmis par le réseau de diffusion; **caractérisé en ce que** seules les secondes données sont émises sur le canal fréquentiel disponible.

6. Procédé d'émission de données de service selon l'une quelconque des revendications précédentes ; **caractérisé en ce que** l'ordinateur local (5) comporte un moyen de détection des fréquences porteuses des canaux du réseau de diffusion, l'ordinateur (5) sélectionnant une fréquence porteuse non utilisée par le réseau de diffusion pour émettre le canal fréquentiel disponible.

7. Procédé d'émission de données de service selon l'une quelconque des revendications 1 à 5 ; **caractérisé en ce qu'**il comporte une étape d'introduction sur l'ordinateur local (5) des références du canal fréquentiel disponible pour diffuser localement les informations additionnelles.

8. Appareil électronique (5) émettant des données de service sur un canal inséré dans un réseau (2) de diffusion de canaux audiovisuels ; **caractérisé en ce qu'**il comporte un moyen pour déterminer (5.1, 5.2) les caractéristiques d'un canal fréquentiel disponible dans l'intervalle de fréquence du réseau de diffusion, le dit réseau diffusant des premières données de service, un moyen de réception (5.5) recevant des secondes données non transmises par le réseau de diffusion (2) à partir d'au moins un autre réseau (6), un moyen (5.6) d'émission locale des secondes données sur le canal fréquentiel disponible, lesdites secondes données étant émises au même format que les premières données émises par le réseau de diffusion.

9. Appareil électronique (5) selon la revendication 8 comportant un moyen de réception des canaux transmis par le réseau de diffusion ; **caractérisé en ce que** les premières données sont aussi émises par le moyen (5.6) d'émission locale sur le canal fréquentiel disponible.

10. Appareil électronique (5) selon la revendication 8 ou 9 comportant un moyen de réception (5.5) des canaux transmis par le réseau de diffusion ; **caractérisé en ce que** les premières données émises par le réseau de diffusion sont utilisées pour la recherche des secondes données reçues d'un autre réseau.

11. Appareil électronique (5) selon la revendication 8 ; **caractérisé en ce qu'**il comporte un moyen d'introduction (5.4) d'une indication sur le type des secondes données à rechercher sur l'autre réseau afin de les émettre sur le canal fréquentiel disponible.

12. Appareil électronique (5) selon la revendication 8 comportant un moyen de réception des canaux transmis par le réseau de diffusion; **caractérisé en ce que** seules les secondes données sont émises sur le canal fréquentiel disponible.

13. Appareil électronique (5) selon l'une quelconque des revendications 8 à 12 ; **caractérisé en ce qu'**il comporte un moyen de détection (5.1, 5.2) des fréquences porteuses des canaux du réseau de diffusion, l'appareil électronique (5) sélectionnant une fréquence porteuse non utilisée par le réseau de diffusion pour émettre le canal fréquentiel disponible.

14. Appareil électronique (5) selon l'une quelconque des revendications 8 à 12 ; **caractérisé en ce qu'**il comporte un moyen d'introduction (5.4) des caractéristiques du canal fréquentiel disponible pour diffuser localement les informations additionnelles.

15. Procédé d'émission de données de service selon l'une quelconque des revendications 1 à 7 ; **caractérisé en ce que** le même format entre les premières et des secondes données ne permet pas de distinguer si la chaîne reçu est émise par le réseau de diffusion ou si elle provienne de l'ordinateur local.
